# EUROPÄISCHE PATENTSCHRIFT

(11) **EP 1 409 979 B1**
(45) Veröffentlichungstag und Bekanntmachung des Hinweises auf die Patenterteilung: **11.06.2014**
(21) Anmeldenummer: 02762372.7
(22) Anmeldetag: 18.07.2002
(51) Int. Cl.: G01L 9/00

(54) **DRUCKSENSOR**
PRESSURE SENSOR
CAPTEUR DE PRESSION

(30) Priorität: 20.07.2001 DE 10135568
(43) Veröffentlichungstag der Anmeldung: 21.04.2004
(73) Patentinhaber: Endress + Hauser GmbH + Co. KG, 79689 Maulburg (DE)
(72) Erfinder: BANHOLZER, Karl-Heinz, 79688 Hausen (DE); GERDES, Bernhard, 79589 Binzen (DE)
(74) Vertreter: Andres, Angelika Maria
(86) Internationale Anmeldenummer: PCT/EP2002/007976
(87) Internationale Veröffentlichungsnummer: WO 2003/014688

(56) Entgegenhaltungen:
- EP-A- 0 570 624
- US-A- 5 051 937
- PATENT ABSTRACTS OF JAPAN vol. 1999, no. 08, 30. Juni 1999 (1999-06-30) -& JP 11 072400 A (MATSUSHITA ELECTRIC WORKS LTD), 16. März 1999 (1999-03-16)
- PATENT ABSTRACTS OF JAPAN vol. 1995, no. 11, 26. Dezember 1995 (1995-12-26) -& JP 07 198515 A (OMRON CORP), 1. August 1995 (1995-08-01)

## Beschreibung

Die Erfindung betrifft einen Drucksensor.

In der Druckmeßtechnik werden z.B. Absolut- und Relativdrucksensoren eingesetzt. Bei Absolutdrucksensoren wird ein zu messender Druck absolut, d.h. als Druckunterschied gegenüber einem Vakuum erfaßt. Mit einem Relativdrucksensor wird ein zu messender Druck in Form eines Druckunterschiedes gegenüber einem Referenzdruck aufgenommen. Der Referenzdruck ist ein Umgebungsdruck der dort herrscht, wo sich der Sensor befindet. Bei den meisten Anwendungen ist dies der Atmosphärendruck am Einsatzort.

Druckmeßgeräte werden in einer Vielzahl von Industriezweigen eingesetzt, z.B. in der Chemie und in der Lebensmittelindustrie. In diesen Industrien sind häufig große Anlagen vorhanden in denen zur Erfassung, Steuerung, Regelung und/oder Automatisierung eines in der Anlage ablaufenden Prozesses an mehreren Stellen Drücke zu messen sind. Dabei kommen eine Vielzahl von Drucksensoren z.B. mit unterschiedlichen Meßbereichen zum Einsatz.

Druckmeßgeräte sind häufig Feuchtigkeit ausgesetzt. Dies ist z.B. der Fall, wenn sie an Orten mit andauernder hoher Luftfeuchtigkeit, z.B. in den Tropen, eingesetzt werden, wenn in der Lebensmittelindustrie Behälter mit heißem Wasser gereinigt und anschließend mit kaltem Wasser gespült werden oder wenn der Druck eines kalten Mediums gemessen wird und sich aufgrund einer höheren Umgebungstemperatur Kondensat bildet.

Drucksensoren weisen üblicherweise eine Meßzelle und eine mit der Meßzelle verbundene Sensorelektronik auf. (siehe EP 0570624 A2 und US 5051937). Die Meßzelle umfaßt einen elektromechanischen Wandler, der eine Reaktion eines druckempfindlichen Elementes in ein elektrisches Signal umwandelt, das über die Sensorelektronik aufgenommen und einer weiteren Auswertung und/oder Verarbeitung zugänglich ist. Die Sensorelektronik muß daher für einen Anschluß derselben, z.B. an eine Meßgerätelektronik oder eine Versorungs- und/oder Signalauswerteeinheit, zugänglich sein. Gerade die Sensorelektronik und deren elektrische Anschlüsse sind aber besonders empfindlich gegenüber Feuchtigkeit und gegenüber mechanischen Belastungen.

Es ist eine Aufgabe der Erfindung, einen Drucksensor mit einer Meßzelle und einer mit der Meßzelle verbundenen Sensorelektronik anzugeben, bei dem die Sensorelektronik und deren elektrische Anschlüsse vor äußeren Einflüssen geschützt sind.

Hierzu besteht die Erfindung in einem Drucksensor gemäß dem Anspruch 1.

Die auf einer Rückseite der Meßzelle angeordnete Sensorelektronik kann auf verschiedene Art und Weise positioniert sein. Einerseits kann die Sensorelektronik unmittelbar an einer Rückseite der Meßzelle und andererseits von der Rückseite abgesetzt montiert sein. Für die abgesetzte Montage kann die Sensorelektronik beispielsweise an einem geeigneten Abstandhalter befestigt sein, der an der Rückseite der Meßzelle angebracht ist. Ein solcher Abstandhalter kann u.a. der thermischen Entkopplung der Sensorelektronik von der Meßzelle dienen. Als Abstandhalter kann u.a. eine Leiterplatte eingesetzt werden, die sich im wesentlichen senkrecht zur Oberfläche der Rückseite der Meßzelle erstreckt.

Gemäß einer Ausgestaltung der Erfindung ist eine Durchführung für ein Röhrchen in der Kappe vorgesehen, und ein Referenzdruck, auf den der zu messende Druck zu beziehen ist, ist im Betrieb durch das Röhrchen hindurch zu der Meßzelle geführt.

Gemäß einer ersten Ausgestaltung ist die Kappe mit deren offenem Ende auf einem äußeren Rand der Rückseite der Meßzelle befestigt.

Gemäß einer zweiten Ausgestaltung ist die Kappe über die Meßzelle gestülpt und an deren offenem Ende mit einer geschlossenen Teilfläche einer von der Vorderseite zur Rückseite der Meßzelle führenden Mantelfläche verbunden.

Gemäß einer Ausgestaltung besteht die Meßzelle aus Keramik, die Kappe besteht aus einem Metall, und die Meßzelle und die Kappe sind mittels einer Fügung hermetisch dicht miteinander verbunden.

Gemäß einer Ausgestaltung besteht die Meßzelle aus Aluminiumoxid, die Kappe besteht aus einer Nickel-Eisen-Kobalt-Legierung, und die Fügung besteht aus einem Aktivhartlot.

Gemäß einer anderen Ausgestaltung besteht die Meßzelle aus Keramik, die Kappe besteht aus Keramik, und die Meßzelle und die Kappe sind mittels einer Fügung aus einem Aktivhartlot hermetisch dicht miteinander verbunden.

Die Kappe bietet einen effektiven Schutz der Meßzelle vor Feuchtigkeit und vor mechanischen und chemischen Einflüssen aus der Umgebung.

Die Erfindung und weitere Vorteile werden nun anhand der Figuren der Zeichnung, in denen zwei Ausführungsbeispiele dargestellt sind, näher erläutert. Gleiche Elemente sind in den Figuren mit den gleichen Bezugszeichen versehen.
Fig. 1 zeigt einen Schnitt durch einen kapazitiven keramischen Drucksensor, bei dem eine Kappe auf der Rückseite der Meßzelle vorgesehen ist, in der die Sensorelektronik eingeschlossen ist;
Fig. 2 zeigt einen Schnitt durch einen kapazitiven keramischen Drucksensor, bei dem eine Kappe die Meßzelle bis auf das druckempfindliche Element einschließt;
Fig. 3 zeigt einen Schnitt durch ein Druckmeßgerät, in das die in Fig. 1 dargestellte Druckmeßzelle eingebaut ist;
Fig. 4 zeigt einen Schnitt durch ein Gehäuse mit einem Prozeßanschluß, in das die in Fig. 1 dargestellte Druckmeßzelle eingebaut ist; und
Fig. 5 zeigt einen Schnitt durch ein Gehäuse mit einem Prozeßanschluß, in das die in Fig. 2 dargestellte Druckmeßzelle eingebaut ist.

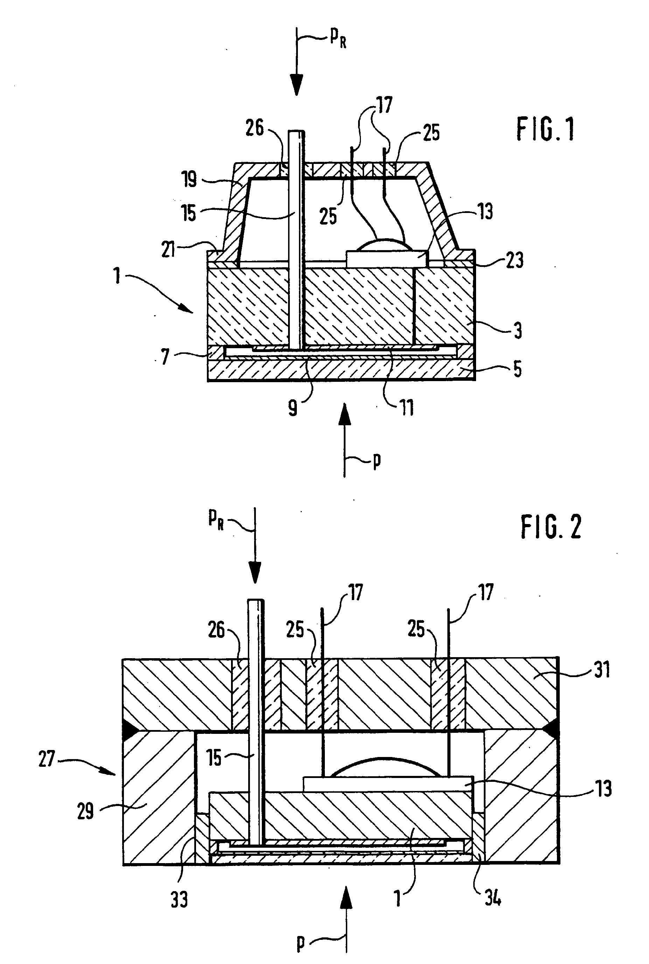

In Fig. 1 ist ein Schnitt durch einen erfindungsgemäßen Drucksensor dargestellt. Er weist eine Meßzelle 1 auf.
Die Meßzelle 1 ist in dem gezeigten Ausführungsbeispiel eine Relativdruckmeßzelle. An einer Vorderseite der Meßzelle 1 ist ein druckempfindliches Element angeordnet, auf das im Betrieb ein zu messender Druck einwirkt.

Die Meßzelle 1 weist einen Grundkörper 3 und eine Meßmembran 5 auf. Der Grundkörper 3 besteht z.B. aus Keramik. Die Meßmembran 5 kann ebenfalls aus Keramik bestehen oder z.B. aus Saphir. Die Meßmembran 5 und der Grundkörper 3 sind an deren Rand unter Bildung einer Meßkammer mittels einer Fügestelle 7 druckdicht und gasdicht miteinander verbunden. Die Meßmembran 5 bildet das druckempfindliche Element. Ein auf sie einwirkender Druck bewirkt eine Auslenkung der Meßmembran 5 aus deren Ruhelage.

Auf einer Innenseite der Meßmembran 5 ist eine Elektrode 9 und auf einer gegenüberliegenden Innenseite des Grundkörpers 3 ist mindestens eine Gegenelektrode 11 angeordnet. Die Elektrode 9 der Meßmembran 5 ist durch die Fügestelle 7 hindurch elektrisch kontaktiert und außerhalb z.B. mit Masse verbunden. Die Gegenelektrode 11 des Grundkörpers 3 ist durch den Grundkörper 3 hindurch zu dessen Außenseite hin elektrisch kontaktiert und führt zu einer auf einer Rückseite der Meßzelle auf dem Grundkörper 3 angeordneten Sensorelektronik 13. Elektrode 9 und Gegenelektrode 11 bilden einen Kondensator und die Sensorelektronik 13 formt die Kapazitätsänderungen des Kondensators z.B. in eine sich entsprechend ändernde elektrische Spannung um.

Der Grundkörper 3 weist eine durchgehende Bohrung auf, in die ein Röhrchen 15 eingeführt ist, das in die Meßkammer hinein führt. Über das Röhrchen 15 wirkt z.B. ein in der Umgebung der Meßzelle 1 herrschender Referenzdruck p_{R}, auf den der zu messende Druck zu beziehen ist, auf eine Innenseite der Meßmembran 5 ein. Dies ist in Fig. 1 durch einen Pfeil symbolisch dargestellt

Im Betrieb wirkt auf eine Außenseite der Meßmembran 5 ein zu messender Druck p ein. Dies ist in Fig. 1 ebenfalls durch einen Pfeil symbolisch dargestellt.

Der Druck p und der Referenzdruck p_{R} bewirken eine vom zu messenden Relativdruck abhängige Auslenkung der Meßmembran 5 die von dem zuvor beschriebenen kapazitiven elektromechanischen Wandler erfaßt und von der Sensorelektronik 13 in eine elektrische Meßgröße umgewandelt wird. Die Meßgröße steht über Anschlußleitungen 17 einer weiteren Verarbeitung und/oder Auswertung zur Verfügung.

Anstatt der beschriebenen kapazitiven keramischen Meßzelle kann z.B. auch eine piezoresistive Meßzelle verwendet werden. Bei diesen Arten von Meßzellen weist der Wandler auf der Meßmembran aufgebrachte Dehnmeßstreifen auf. Die Meßkammer kann auch bei diesen Meßzellen durch einen Grundkörper und die Meßmembran selber gebildet sein. Die Meßmembran ist dann mit deren äußerem Rand auf dem Grundkörper befestigt.

Der Drucksensor weist eine fest mit der Meßzelle verbundenen Kappe 19 auf, die die Sensorelektronik 13 umschließt. Die Kappe 19 ist topfförmig und sie ist mit deren offenem Ende auf einem äußeren Rand der Rückseite der Meßzelle 1 befestigt. Bei dem in Fig. 1 dargestellten Ausführungsbeispiel weist die Kappe 19 an deren offenem Ende einen sich radial nach außen erstreckenden Rand 21 auf, der parallel zu der membran-abgewandten Rückseite des Grundkörpers 3 verläuft.

Die Meßzelle 1 besteht aus Keramik, vorzugsweise aus Aluminiumoxid. Die Kappe 19 besteht aus einem Metall.
Wird eine Meßzelle 1 aus einem Aluminiumoxid verwendet, so sind z.B. Nickel-Eisen-Kobalt-Legierungen, wie sie z.B. unter den Produktnamen Vacon oder Kovar im Handel erhältlich sind, besonders geeignete Werkstoffe für die Kappe 19, da diese Werkstoffe einen thermischen Ausdehnungskoeffiezienten aufweisen, der dem thermischen Ausdehnungskoeffizienten von Aluminiumoxid sehr ähnlich ist. Die Meßzelle 1 und die Kappe 19 sind mittels einer Fügung 23, vorzugsweise aus einem Aktivhartlot, mechanisch fest und hermetisch dicht miteinander verbunden. Alternativ können die Meßzelle 1 und die Kappe 19 auch auf andere Weise z.B. unter Zwischenfügung einer Dichtung dicht und fest miteinander verbunden sein.

Die Kappe 19 weist mindestens eine Durchführung 25, z.B. in Öffnungen in der Kappe 19 eingeschmolzene Glasdurchführungen, auf, durch die an die Sensorelektronik 13 angeschlossene elektrische Anschlußleitungen 17 hindurch geführt sind. Anstelle von Glasdurchführungen können auch andere Durchführungen, z.B. Durchführungen mit Hartverguß oder Manschetten aus anderen Dichtungswerkstoffen eingesetzt werden. Bei dem in Fig. 1 dargestellten Ausführungsbeispiel sind zwei Durchführungen 25 symbolisch dargestellt. Zusätzlich ist bei dem in Fig. 1 dargestellten Ausführungsbeispiel eine weitere Durchführung 26, z.B. ebenfalls eine Glasdurchführung, für das Röhrchen 15 in der Kappe 19 vorgesehen. Durch das Röhrchen 15 hindurch ist der Referenzdruck p_{R}, auf den der zu messende Druck p zu beziehen ist, im Betrieb zu der Meßzelle geführt. Je nach Aufbau der Meßzelle kann das Röhchen 15 natürlich auch weiter von der Sensorelektronik 13 entfernt sein. In dem Fall kann das Röhrchen 15 seitlich an der Kappe 19 vorbei geführt sein. Eine zusätzliche Durchführung entfällt in dem Fall natürlich.

Natürlich kann der erfindungsgemäße Drucksensor auch als ein Absolutdrucksensor ausgebildet sein. Dann ist die Meßkammer der Meßzelle 1 evakuiert und die Bohrung durch den Grundkörper 3, das Röhrchen 15 und die Durchführung 26 entfallen.

In Fig. 2 ist ein weiteres Ausführungsbeispiel eines erfindungsgemäßen Drucksensors dargestellt. Die Meßzelle 1 ist identisch zu der in Fig. 1 dargestellten Meßzelle 1.

Auch das in Fig. 2 dargestellte Ausführungsbeispiel weist eine Kappe 27 auf, die die Sensorelektronik 13 umschließt. Sie weist einen Zylinder 29 und eine ein Ende des Zylinders 29 verschließende Scheibe 31 auf. Die Kappe 27 ist über die Meßzelle 1 gestülpt und an deren offenem Ende mit einer geschlossenen Teilfläche 33 einer von der Vorderseite zur Rückseite der Meßzelle 1 führenden Mantelfläche verbunden.

Die Scheibe 31 weist drei Öffnungen auf in die die Durchführungen 25 für die Anschlußleitungen 17 und die Durchführung 26 für das Röhrchen 15 eingebracht sind.

Die Meßzelle 1 besteht auch bei dem in Fig. 2 dargestellten Ausführungsbeispiel aus Keramik, vorzugsweise aus Aluminiumoxid.

Die Kappe 27 besteht aus einem Metall oder aus Keramik, vorzugsweise aus Aluminiumoxid. Wird eine Meßzelle 1 aus einem Aluminiumoxid verwendet, so sind z.B. Nickel-Eisen-Kobalt-Legierungen, wie sie z.B. unter den Produktnamen Vacon oder Kovar im Handel erhältlich sind, besonders geeignete Werkstoffe für die Kappe 27, da diese Werkstoffe einen thermischen Ausdehnungskoeffiezienten aufweisen, der dem thermischen Ausdehnungskoeffizienten von Aluminiumoxid sehr ähnlich ist. Besteht die Kappe 27 aus Keramik, so wird vorzugsweise für Kappe 27 und Meßzelle 1 der gleiche Werkstoff verwendet.

Die Meßzelle 1 und die Kappe 27 sind mittels einer Fügung 34, vorzugsweise aus einem Aktivhartlot, mechanisch fest und hermetisch dicht miteinander verbunden.

Besteht die Kappe 19 bzw. 27 aus einem Metall, so bietet dies den Vorteil, daß im Inneren der Kappe 19 bzw. 27 definierte elektrische Bedingungen bestehen, die sich durch den Einbau der Druckmeßzelle nicht mehr verändern. Dies bedeutet, daß die elektrischen Verhältnisse wie sie bei der Kalibration der Druckmeßzelle bestehen sich nicht mehr verändern. Es kommen z.B. keine nachteiligen Einflüsse durch Streukapazitäten zu Gehäuseteilen zum tragen. Außerdem bildet eine metallische Kappe 19, 27 quasi einen Faraday-Käfig und bietet somit einen gewissen Schutz für die elektronische Schaltung 13 vor elektromagnetischen Störungen.

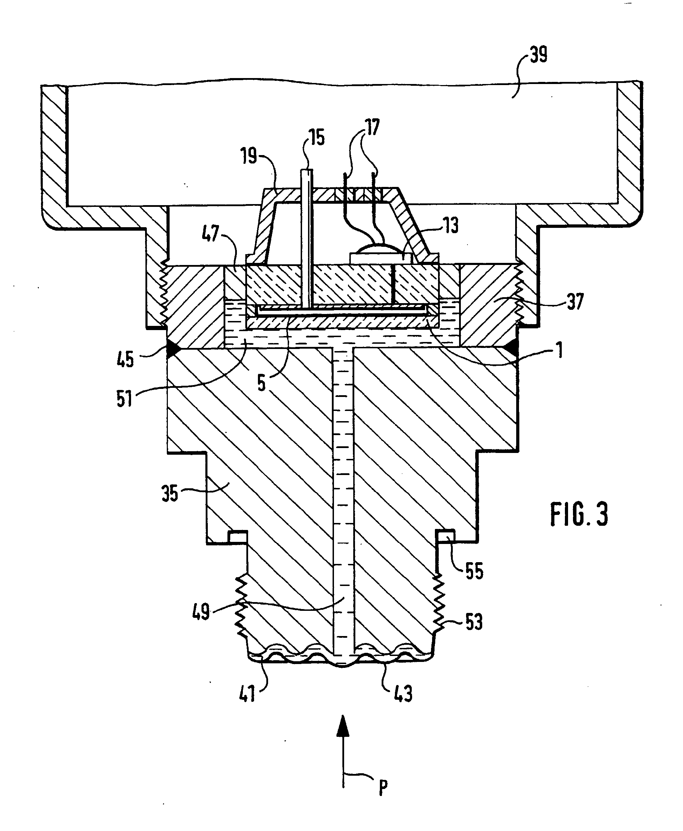

Fig. 3 zeigt ein Beispiel eines Druckmeßaufnehmers mit einem erfindungsgemäßen Drucksensor. Es ist hier als Beispiel der in Fig. 1 dargestellte Drucksensor dargestellt.

Der Druckmeßaufnehmer weist einen metallischen Druckmittler 35 auf, an den ein Gehäuse 37 und ein mit dem Gehäuse 37 verbundenes Anschlußgehäuse 39 angrenzen.

Der Druckmittler 35 ist im wesentlichen zylindrisch und weist endseitig eine mit einer Flüssigkeit gefüllte Kammer 41 auf, die von einer metallischen Trennmembran 43 verschlossen ist. Der Druckmittler 35 und die Trennmembran 43 bestehen vorzugsweise aus einem hochwertigen und korrosionsbeständigen Edelstahl. Im Betrieb wirkt auf die Trennmembran 43 der zu messende Druck p ein, der in Fig. 3 durch einen Pfeil angedeutet ist.

Das Gehäuse 37 ist zylindrisch und liegt mit einer kreisringförmigen Grundfläche auf einer kreisringförmigen trennmembran-abgewandten Stirnfläche des Druckmittlers 35 auf. Gehäuse 37 und Druckmittler 35 sind entweder ein einziges Bauteil oder sie sind miteinander durch eine Verbindung 45 aus einem anorganischen Material verbunden.

In dem Gehäuse 37 ist die keramische Meßzelle 1 angeordnet.
Die keramische Meßzelle 1 ist in dem Gehäuse 37 mittels einer Verbindung 47 aus einem anorganischen Material befestigt. In dem gezeigten Ausführungsbeispiel sind die keramische Meßzelle 1 und das Gehäuse 37 zylindrisch und koaxial zueinander angeordnet, so daß das Gehäuse 37 die Meßzelle 1 umgibt. Die Verbindung 47 ist vorzugsweise in einem ringzylindrischen Spalt zwischen dem Gehäuse 37 und dem Grundkörper 3 angeordnet. Hierdurch wird erreicht, daß die empfindliche Meßmembran 3 im wesentlichen einspannungsfrei bleibt.

Das Gehäuse 37 besteht vorzugsweise aus einem Material, das einen thermischen Ausdehnungskoeffizienten aufweist, der ungefähr gleich dem thermischen Ausdehnungskoeffizienten der Keramik der Meßzelle 1 ist. Wird z.B. eine Meßzelle aus einem Aluminiumoxid verwendet, so sind z.B. Nickel-Eisen-Kobalt-Legierungen, wie sie z.B. unter den Produktnamen Vacon oder Kovar im Handel erhältlich sind, geeignete Werkstoffe für das Gehäuse 37. Alternativ kann das Gehäuse 37 aber auch ebenfalls aus einer Keramik, z.B. einem Aluminiumoxid bestehen. Durch eine solche geeignete Materialwahl wird erreicht, daß auch bei starken Temperaturschwankungen nur sehr geringe Kräfte vom Gehäuse 37 auf die Meßzelle 1 ausgeübt werden.

Bei einem metallischen Gehäuse 37 kann die Verbindung zwischen dem Gehäuse 37 und dem Druckaufnehmer 35 z.B. eine Schweißung und die Verbindung 47 eine metallische Fügung, z.B. mit einem Aktivhartlot, sein. Bei einem Gehäuse 37 aus Keramik können beide Verbindungen 47 metallische Fügungen, z.B. mit einem Aktivhartlot sein.

Der Druckmittler 35 weist eine durchgehende Bohrung 49 auf, deren eines Ende in die Kammer 41 mündet und deren anderes Ende in einer durch das Gehäuse 37 und die Meßzelle 1 begrenzten Kammer 51 mündet. Die Kammer 41, die Bohrung 49 und die Kammer 51, sowie ein vor der Meßzelle 1 dem Druckmittler 35 zugewandter Innenraum des Gehäuses 37 sind mit einer möglichst inkompressiblen Flüssigkeit, z.B. einem Silikonöl, gefüllt.

Ein auf die Trennmembran 43 einwirkender Druck p wird durch die Flüssigkeit auf die Meßmembran 5 übertragen, und es wird eine vom zu messenden Relativdruck abhängige Auslenkung der Meßmembran 5 von dem zuvor beschriebenen kapazitiven elektromechanischen Wandler erfaßt und von der Sensorelektronik 13 in eine elektrische Meßgröße umgewandelt.

In dem Anschlußgehäuse 39 kann z.B. eine weiterführende Elektronik angeordnet sein, die die von der Sensor-elektronik 13 über die Anschlußleitungen 17 zur Verfügung gestellten Meßgrößen weiter verarbeitet und z.B. ein in einer speziellen Anwendung gewünschtes Ausgangssignal abgibt. Besonders häufig verwendete Ausgangssignale sind z.B. Signalströme, deren Stromstärke sich in Abhängigkeit vom aktuellen Meßwert ändert oder digitale Signale, die über eine Busanschaltung auf eine Busleitung eingekoppelt werden.

Der Druckmittler 35 weist an dessen meßzellen-abgewandten Ende ein Außengewinde 53 auf, mittels dessen der Druckmeßaufnehmer an einem Meßort in eine entsprechende Öffnung frontbündig einschraubbar ist. Der Druckmittler 35 dient somit gleichzeitig als Prozeßanschluß. Oberhalb des Außengewindes 53 weist der Druckmittler 35 eine ringförmige Absatzfläche auf, in der eine umlaufende Nut 55 zur Aufnahme einer, in Fig. 3 nicht dargestellten Prozeßdichtung, vorgesehen ist.

Der in Fig. 3 dargestellte Druckmeßaufnehmer bietet den Vorteil, daß alle mit einem Medium dessen Druck gemessen werden soll in Kontakt tretenden Teile, also die Trennmembran 43 und alle weiteren mit einem Medium, dessen Druck p zu messen ist, beim Messen in Kontakt kommenden Bauteile, hier lediglich das Außengewinde 53, metallisch sind. Der Druckaufnehmer selber weist keinerlei Dichtungen aus organischen Materialien aufweist. Es ist lediglich eine einzige Dichtung, nämlich die Prozeßdichtung, erforderlich, und diese ist jederzeit austauschbar.

Metall wird insb. in der Lebensmittelindustrie sehr gerne verwendet, da Metall sehr gut zu reinigen ist. Ebenso ist es in der Lebensmittelindustrie aus hygienischen Gründen von Vorteil, wenn möglichst wenig Dichtungen aus organischen Materialien notwendig sind, und diese jederzeit austauschbar sind.

Natürlich können die erfindungsgemäßen Drucksensoren auch in anderer Weise als in Fig. 3 dargestellt eingesetzt werden. Sie können z.B. einfach derart in ein Gehäuse eingespannt werden, daß das druckempfindliche Element von außen direkt zugänglich ist.

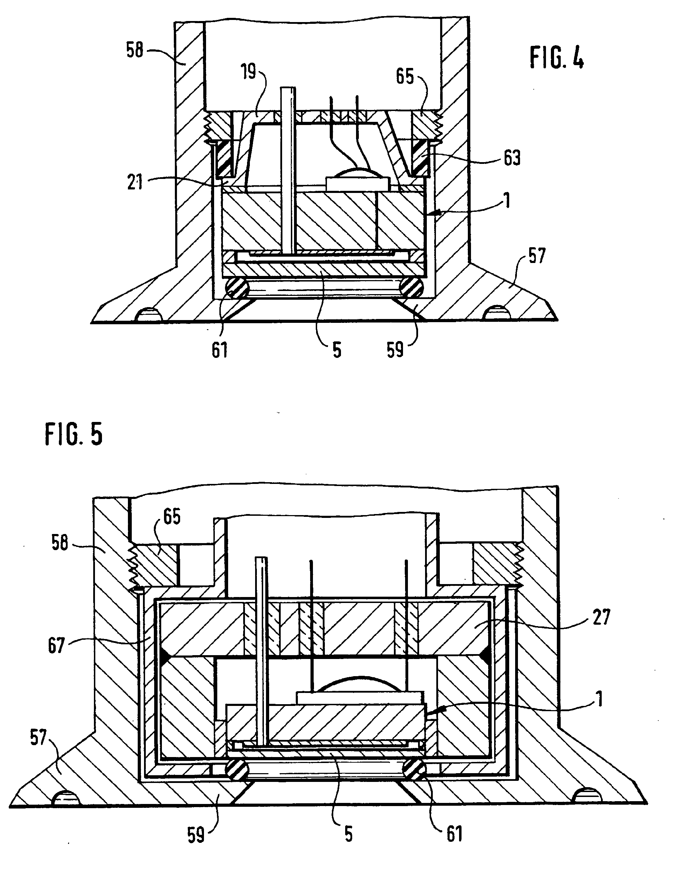

In den Figuren 4 und 5 sind die in den Figuren 1 und 2 dargestellten Drucksensoren in Verbindung mit einem in der Lebensmittelindustrie üblichen Prozeßanschluß 57 dargestellt.

Die Drucksensoren sind in ein im wesentlichen zylindrisches Gehäuse 58 eingespannt, das endseitig in prozeß-zugewandter Richtung eine Schulter 59 aufweist, auf der die Meßmembran 5 mit deren äußerem druckunempfindlichen Rand unter Zwischenfügung einer Dichtung 61, z.B. eines O-Rings, aufliegt.

Zur Befestigung an einem Meßort ist das Gehäuse 58 mit dem in den Figuren 4 und 5 lediglich schematisch dargestellten Prozeßanschluß 57 versehen, der integraler Bestandteil des Gehäuses 58 ist. Bei dem dargestellten Prozeßanschluß 57 handelt es sich um einen Standardanschluß, der in der internationalen Norm ISO 2852 definiert ist. Dieser Anschluß ist in der Meßtechnik unter dem Handelsnamen 'Triclamp' bekannt. Andere Arten der Befestigung sind ebenfalls einsetzbar.

Bei dem in Fig. 4 dargestellten Ausführungsbeispiel liegt auf dem sich radial nach außen erstreckenden Rand 21 der Kappe 19 ein Ringzylinder 63 auf. Es ist ein Gewindering 65 vorgesehen, der von der prozeß-abgewandten Seite her in das Gehäuse 58 hinein gegen den Ringzylinder 63 geschraubt ist und die Druckmeßzelle 1 gegen die Dichtung 61 und die Schulter 59 preßt. Der Gewindering 65 besteht aus Metall, z.B. aus einem Edelstahl. Der Ringzylinder 63 besteht vorzugsweise aus einem Kunststoff und dient zum Schutz der Kappe 19 beim Einschrauben des Gewinderings 65 und zum Ausgleich von Spannungen, die durch unterschiedliche thermische Ausdehnungen der Druckmeßzelle 1, des Gehäuses 58 und des Gewinderings 65 entstehen können. Auch bewirkt er eine Isolation der Kappe 19 gegenüber dem Gehäuse 58.

Bei dem in Fig. 5 dargestellten Ausführungsbeispiel ist die Druckmeßzelle 1 ebenfalls mittels eines in das Gehäuse 58 eingeschraubten Gewinderings in das Gehäuse 58 eingespannt.

Die Kappe 27 ist von einer Hülse 67 umgeben, die eine der Schulter 59 zugewandte kreisscheibenförmige Stirnfläche der Kappe 27, eine dem Gehäuse 58 zugewandten zylindrischen Mantelfläche und eine von der Schulter 59 abgewandte kreisscheibenförmige Stirnfläche der Kappe 27 umgibt.
Besteht die Kappe 27 aus einem Metall, so besteht die Hülse 67 vorzugsweise aus einem Kunststoff und bewirkt dann eine Isolation der Druckmeßzelle 1 gegenüber dem Gehäuse 58. Besteht die Kappe 27 dagegen aus einem Isolator, z.B. aus Keramik, so besteht die Hülse 67 vorzugsweise aus einem Metall und bewirkt dann eine elektrische Abschirmung der Druckmeßzelle 1 gegenüber äußeren elektrischen Einflüssen.

## Patentansprüche

1. Drucksensor mit
- einer Meßzelle (1), die aus Keramik besteht,
- einem an einer Vorderseite der Meßzelle (1) angeordneten druckempfindlichen Element, auf das im Betrieb ein zu messender Druck (p) einwirkt,
- einer auf einer Rückseite der Meßzelle (1) angeordneten Sensorelektronik (13), und
- einer mit der Meßzelle (1) verbundenen Kappe (19, 27) die aus Metall oder aus Keramik besteht,
-- die die Sensorelektronik (13) umschließt, und
-- die mindestens eine Durchführung (25) aufweist,
--- durch die an die Sensorelektronik (13) angeschlossene Anschlußleitungen (17) hindurch geführt sind, **dadurch gekennzeichnet, daß**
- die Meßzelle (1) und die Kappe (19, 27) mittels einer Fügung hermetisch dicht miteinander verbunden sind.

2. Drucksensor nach Anspruch 1, bei dem eine Durchführung (26) für ein Röhrchen (15) in der Kappe (19, 27) vorgesehen ist, und bei dem ein Referenzdruck (p_{R}), auf den der zu messende Druck (p) zu beziehen ist, im Betrieb durch das Röhrchen (15) hindurch zu der Meßzelle (1) geführt ist.

3. Drucksensor nach Anspruch 1, bei dem die Kappe (19) mit deren offenem Ende auf einem äußeren Rand der Rückseite der Meßzelle (1) befestigt ist.

4. Drucksensor nach Anspruch 1, bei dem die Kappe (27) über die Meßzelle (1) gestülpt ist und an deren offenem Ende mit einer geschlossenen Teilfläche einer von der Vorderseite zur Rückseite der Meßzelle (1) führenden Mantelfläche verbunden ist.

5. Drucksensor nach Anspruch 1, bei dem
- die Meßzelle (1) aus Aluminiumoxid besteht,
- die Kappe (19, 27) aus einer Nickel-Eisen-Kobalt-Legierung besteht, und
- die Fügung aus einem Aktivhartlot besteht.

6. Drucksensor nach Anspruch 1, bei dem
- die Kappe (27) aus Keramik besteht, und
- die Fügung aus einem Aktivhartlot hermetisch besteht.

7. Drucksensor nach einem der vorhergenenden Ansprüche, bei dem die Sensorelektronik (13) unmittelbar an der Rückseite der Druckmeßzelle (1) angeordnet ist.

8. Drucksensor nach einem der Ansprüche 1 bis 6, bei dem die Sensorelektronik (13) beabstandet zur Rückseite der Druckmeßzelle (1) montiert ist.

## Claims

1. Pressure sensor with
- a ceramic measuring cell (1),
- a pressure-sensitive element arranged on the front of the measuring cell (1) on which a pressure (p) to be measured during operation acts,
- a sensor electronics system (13) arranged on the rear of the measuring cell (1), and a cap (19, 27) which is made of metal or ceramic and is attached to the measuring cell (1),
-- said cap surrounding the sensor electronics system (13), and
-- having at least one bushing (25),
--- through which connection cables (17) connected to the sensor electronics system (13) are guided, **characterized in that**
- the measuring cell (1) and the cap (19, 27) are hermetically sealed together via a junction.

2. Pressure sensor as claimed in Claim 1, wherein a bushing (26) is provided for a tube (15) in the cap (19, 27) and wherein a reference pressure (p_{R}) to which the pressure to be measured (p) is to refer is guided, during operation, through the tube (15) towards the measuring cell (1).

3. Pressure sensor as claimed in Claim 1, wherein the cap (19) is secured to an outer edge of the rear of the measuring cell (1) with its open end.

4. Pressure sensor as claimed in Claim 1, wherein the cap (27) is put over the measuring cell (1) and connected at its open end to a closed partial surface of a lateral area extending from the front to the rear of the measuring cell (1).

5. Pressure sensor as claimed in Claim 1, wherein
- the measuring cell (1) consists of aluminum oxide,
- the cap (19, 27) consists of a nickel-iron-cobalt alloy, and
- the junction consists of an active brazing solder.

6. Pressure sensor as claimed in Claim 1, wherein
- the cap (27) consists of ceramic, and
- the junction consists hermetically of an active brazing solder.

7. Pressure sensor as claimed in one of the previous claims, wherein the sensor electronics system (13) is arranged directly on the rear of the pressure measuring cell (1).

8. Pressure sensor as claimed in one of the Claims 1 to 6, wherein the sensor electronics system (13) is mounted at a distance to the rear of the pressure measuring cell (1).

## Revendications

1. Capteur de pression avec
- une cellule de pression (1) constituée de céramique,
- un élément sensible à la pression disposé sur une face avant de la cellule de mesure (1), élément sur lequel agit, en fonctionnement, une pression (p) à mesurer,
- une électronique de capteur (13) disposée sur une face arrière de la cellule de mesure (1), et
une calotte (19, 27) reliée avec la cellule de mesure (1), constituée de métal ou de céramique,
-- qui entoure l'électronique de capteur (13), et
-- qui présente au minimum une traversée (25),
--- à travers laquelle des conducteurs raccordés à l'électronique de capteur (13) sont passés, **caractérisé en ce que**
- la cellule de mesure (1) et la calotte (19, 27) sont reliées entre elles de façon hermétiquement étanche au moyen d'une jonction.

2. Capteur de pression selon la revendication 1, pour lequel est prévue une traversée (26) pour un tube (15) dans la calotte (19, 27), et pour lequel une pression de référence (p_{R}), à laquelle la pression à mesurer (p) se réfère, est acheminée à travers le tube (15) vers la cellule de mesure (1).

3. Capteur de pression selon la revendication 1, pour lequel la calotte (19) est fixée avec son extrémité ouverte à un bord extérieur de la face arrière de la cellule de pression (1).

4. Capteur de pression selon la revendication 1, pour lequel la calotte (27) est mise sur la cellule de mesure (1) et reliée sur son extrémité ouverte avec une surface partielle fermée d'une surface latérale s'étendant de la face avant vers la face arrière de la cellule de mesure (1).

5. Capteur de pression selon la revendication 1, pour lequel
- la cellule de mesure (1) est constituée d'oxyde d'aluminium,
- la calotte (19, 27) est constituée d'un alliage nickel-fer-cobalt, et
- la jonction est constituée d'une brasure active.

6. Capteur de pression selon la revendication 1, pour lequel
- la calotte (27) est constituée de céramique, et
- la jonction hermétique est constituée d'une brasure active.

7. Capteur de pression selon l'une des revendications précédentes, pour lequel l'électronique de capteur (13) est disposée à proximité immédiate de la face arrière de la cellule de mesure de pression (1).

8. Capteur de pression selon l'une des revendications 1 à 6, pour lequel l'électronique de capteur (13) est montée à distance de la face arrière de la cellule de mesure de pression (1).
